# EUROPEAN PATENT APPLICATION

(11) **EP 1 380 207 A1**
(43) Date of publication of application: **14.01.2004**
(21) Application number: 02702761.4
(22) Date of filing: 06.03.2002
(51) Int. Cl.: A01N 1/02

(54) **METHOD OF PRESERVING MAMMALIAN ORGAN**

(30) Priority: 06.03.2001 US 799112
(71) Applicant: Biobank Co., Ltd, Atsugi-shi, Kanagawa 243-0017 (JP)
(72) Inventor: SEKI, Kunihiro, Fujisawa-shi, Kanagawa 251-0027 (JP)
(74) Representative: VOSSIUS & PARTNER
(86) International application number: PCT/JP2002/002074
(87) International publication number: WO 2002/069702

(57) **Abstract**

The method of the invention for preserving mammalian organs comprises the steps of: withdrawing water from an organ having a physiologically normal water content through the vascular system in the organ, thereby to remove at least about 10%, preferably at least about 25% of water by weight based on the total weight of the organ before dehydration; immersing said organ in an inert medium; and maintaining said organ at a chill temperature.

## Description

### TECHNICAL FIELD OF THE INVENTION

The present invention relates to a method for prolonged storage of extracted mammalian organs.

### BACKGROUND OF THE INVENTION

Clinical transplants of human organs such as lungs, heart, liver, kidneys and pancreas are routinely performed today. However, as the number of patients waiting for organ transplants increases yearly, the shortage of donors has become a serious problem and the waiting time to surgery is also increasing. Even if a donor is found, his or her organs cannot be effectively used in transplants since nothing like blood banks exist for organs that are fully equipped with the ability to preserve organs for prolonged periods and allow for efficient supply of organs.

Organs to be transplanted are most commonly preserved by cold storage but the preservation limit is about 4 - 24 hours (Cooper JD, Patterson GA, Trulock EP et al.; J. Thorac. Cardiovasc. Surg. 107, 460-471, 1994).

In experiments using University of Wisconsin Solution (UWS) as a medium for cold storage of hearts from rats, rabbits and baboons before resuscitation, the time limit was 6 - 18 hours (Makowka I, Zerbe TR, Champman F et al.; Transplant Proc. 21, 1350, 1989 and Yen T, Hanan SA, Johnson DE et al.; Ann. Thorac. Surg. 49, 932, 1990). Transplanting of rat hearts (n = 5) immersed in a combination medium of UWS and perfluorocarbon was found to be successful at both 24 hours (100%) and 48 hours (4 out of the 5 animals) (Kuroda Y, Kawamura T, Tanioka T et al; Transplantation, 59, 699-701, 1995). The reason for these short time limits is that when removed hearts are exposed to the low temperature of 4°C or ischemic injury, their cell membranes are damaged to make tissue cell resuscitation impossible (Pegg DE; Organ Preservation Surg. Clin. North Am. 66, 617, 1986: Oz MC, Pinsky DJ, Koga S et al.; Circulation 88, 291-297, 1993: and Heffner JE, Pepine JE; Rev. Pespir. Dis. 140, 531-554, 1989).

The technology for storing mammalian living tissues over prolonged periods before resuscitation have seen marked advances only in the area of single cells such as blood, sperm and ova. Efforts to develop practically feasible methods for the cold storage of living tissues which are aggregates of cells and organs which are composed of several tissues are also in progress but they have to meet the inexorable requirement that transplant be performed within 24 hours of storage (Kalayoglu M, Sollinger HW, Strarra RJ et al.; Lancet 2, 617, 1988).

Trehalose (C₁₂H₂₂O₁₁) is an interesting substance to mention, which is a nonreducing disacharide found widely in nature and it has been reported to have the ability to stabilize or protect the structure of cell membranes under various types of stress (Crowe JH, Crowe LM, Chapman D; Science 233, 701-703, 1984 and Wiemken A; Antinei Van Leeunwenhoek 58, 209-217, 1990). It was also reported that trehalose had the ability to protect cell membranes of the heart when it was exposed to the low temperture of 4°C or ischemic injury (Stringham JC, Southhard JH, Hegge J et al.; Transplantation 58, 287-294, 1992 and Hirata T, Fukuse T, Liu CJ et al.; Surgery 115, 102-107, 1994). According to reports of experiments with tardigrades under high hydrostatic pressure, trehalose increased 10-fold in an anhydrous state (Crowe JH, Crowe LM, Chapman D; Science 233, 701-703, 1984 and Crowe JH, Crowe LM, Chapman D, Aurell Wistorm; Biochemical Journal 242, 1-10, 1987). Tardigrades are mulicellular organisms composed of ca. 40,000 cells including nerve cells.

The present inventor previously found that tardigrades in a desiccation state had the viability to withstand high hydrostatic pressures up to 600 MPa (Kunihiro Seki et al.; Nature Vol. 395, No. 6705, pp. 853-854, 29 Oct. 1998 and Japanese Patent Public Disclosure No. 289917/1999 which is incorporated herein by reference to the specification and the drawings). Tardigrades become "desiccate" when they are in the "tun" state. The physiological mechanism behind their tun state has not been fully unravelled but it is at least clear that desiccated tardigrades have lost an extremely large amount of water in their body to become dehydrated.

In the conventional storage of organs by refrigeration as described above, the temperature of the organ is lowered so that its metabolism is suppressed to a level that maintains its viability. While the metabolism of the organ is suppressed by reducing temperature, water as a polar medium is a rich supply of ions which cause self-disintegration of cells, their death and necrosis over time.

Hence, the longer the period of storage by refrigeration, the higher the frequency of the occurrence of serious thrombus formation and dysfunction. Organs cannot be stored cold for an indefinite period.

Animal tissue cells generally are not viable in the absence of water. One may readily imagine that organs of higher animals which are composed of heterogeneous tissues can never be resuscitated from a desiccation state. Techniques for preserving plants and various bacteria in a desiccation or dry state have already been developed but not a single experiment has been reported in which organs of higher animals were successfully resuscitated after storage in a desiccation or dry state.

The present inventor, to his surprise, found that when extracted mammalian organs were deprived of much water under specified conditions and later stored at low temperature within an inert medium, they had apparent death of the same nature as experienced by tardigrades which remained viable in the tun state for a prolonged period (Japanese Patent Public Disclosure No. 2000-72601, which is incorporated herein by reference to the specification).

Particularly surprising was that multi-cell and multi-tissue mammalian organs resuscitated from an extremely dehydrated state and that the resuscitated heart was found to beat. The cells of the resuscitated organ are believed to be in apparent death characterized by either an extreme drop in oxygen consumption (no greater than 1/1000 of the normal level) or substantial arrest of oxygen consumption.

The organs preserved by the method according to JP Public Disclosure No. 2000-72601 can be later resuscitated for collecting viable nerves or stem cells. The resuscitated organs or the collected tissues can be used in transplants. For histopathological studies, it is quite significant that resuscitable biomaterials rather than necrotic specimens can be stored for a long period.

The preserving method as described above can provide a technique by which organs can be stored in vitro for a significantly increased number of days while preventing their cells and tissues from undergoing self-disintegration over time. This technique depends on the contact of organs with dehydrators. In such a viewpoint, there is still need to seek more preferable techniques to improve the methods for preserving organs.

### DISCLOSURE OF THE INVENTION

The method for preserving mammalian organs according to the present invention comprises the steps; dehydrating an organ to remove water but leave intact an amount water that permits later resuscitation; and immersing the organ in an inert medium and maintaining it at a chill temperature.

A method for preserving mammalian organs according to the invention comprises the steps of: withdrawing water from an organ having a physiologically normal water content through the vascular system in the organ, thereby to remove at least about 10% or at least 25% of water by weight based on the total weight of the organ before dehydration, but leave about 10% to about 20% of water by weight based on the total water content before dehydration; immersing said organ in an inert medium; and maintaining said organ at a chill temperature. Examples of such stored mammalian organs include heart, liver, kidneys, pancreas and lungs.

A method for preserving a mammalian heart according to the invention comprises the steps of: removing blood from a heart by flushing with physiological saline until the blood in the heart is replaced by the physiological saline; removing water from the flushed heart by withdrawing water through the blood vessel system in the heart, thereby to remove about 10% to about 50% of water by weight based on the total weight of the heart before dehydration, immersing said heart in an inert medium; and maintaining said heart at a chill temperature between about 1°C and about 8°C.

The dehydration step achieved through the vascular system comprises feeding a gas into the vascular system in an organ such as the heart. During the gas perfusion into the aorta of the heart, the flushing gas withdraws water from within the blood vessel system of the heart, i.e., the flow pressure of the gas flow brings water to the outside of the heart. It is preferred to apply a constant flow pressure of the gas. The dehydration step may further comprise contacting the organ with a dehydrator, wherein the organ is immersed in an inert medium. The step of dehydration using gases is preferably preceded by blood removal using physiological saline prior to the dehydration step, in order to avoid the problem of blood coagulation upon contact with the flushing gas. It is the most preferable way to apply a constant flow pressure of the physiological saline in the step of removing blood.

The gas to be supplied into the vascular system may be air or a gaseous mixture of O₂ and CO₂. Alternatively, inert gases may be used, as exemplified by N₂, He, Ar, Ne, Kr and Xe. The gas perfusion can be effected with an irrigation apparatus for flushing physiological saline if the gas is pumped in instead of the physiological saline. As a result of this gas perfusion of the vascular system, the body fluid in the organ is pushed forward so that water is withdrawn from every one of the cells via capillaries.

Liquids to be supplied to the vascular system include solvents that make use of osmotic pressure difference to displace water from cells, as exemplified by hypertonic liquids more concentrated than the body fluids in organs. These may be substituted by the inert medium to be described later, or alcohols.

A medium as described above get into capillaries from one end of the vascular system and creates a flow pressure that allows the gas medium to infuse all parts of the organ tissues at substantially the same rate; thereafter, the gas medium circulates through the capillaries (for example, from arterial to venous vessels) until it reaches the other end of the vascular system. This dehydration via the vascular system utilizes the water supply passages inherent in organs and can hence create a uniform dehydrated state at slow speed in the desired tissues or cells. Even in the case of mammalian, multi-cell and multi-tissue organs, transfer to a highly dehydrated state can be achieved smoothly without undue stress on the living tissue. The living tissue is usually placed under stress by 10 wt% or more dehydration; however, dehydration via the vascular system can bring organs to apparent death in an extremely stable state without causing ischemic injury or damaging the living tissue. Upon refilling with water, functional resuscitation occurs not only in the cells and tissues but also in the organs themselves.

Apparent death usually means biological apparent death. The term "apparent death" as intended by the invention should be taken to mean such a state that the external signs of "life" are lost as a result of enhanced dehydration but can be restored upon refilling with water. The term "resuscitation" as used herein means such a phenomenon that upon refilling with water, a dehydrated tissue or organ resumes recognizable electrophysiological reactions or biological life activities, respectively.

The invention in another aspect is related to a method for preserving mammalian organs comprising the steps of: forming an oil film on the surface of a heart having a physiologically normal water content; exposing said heart to a gas such that water in said heart is evaporated into said gas, thereby to remove at least about 10% of water by weight based on the total weight of the heart before dehydration; maintaining said organ at a chill temperature between about 1°C and about 8°C, and preferably between about 2°C and about 4°C.

Also, the invention is related to a method for preserving mammalian hearts comprising the steps of: removing blood from a heart by flushing with physiological saline until the blood in the heart is replaced by the physiological saline; forming an oil film on the surface of the flushed heart; exposing said heart to a gas such that water in said heart is evaporated into said gas, thereby to remove at least about 10% to 50% of water by weight based on the total weight of the heart before dehydration; maintaining said heart at a chill temperature between about 1°C and about 8°C.

According to the present invention, when free water is removed from the tissues and cells of the organ, biostructures such as biomembranes become less susceptible to the attack of substances, particularly metal ions, that can be activated in the aqueous phase. The biostructures are presumably protected by the surrounding water in a crystalline state called "bound water". As a result of the removal of the polar medium that degrades the living tissue, the tissues and cells of the organ become immune to degradation with time and the organ can be preserved in a significantly improved state. In this case, trehalose in the preserving solution can contribute to stabilizing the biostructure.

The heart, liver, kidneys, pancreas and lungs preserved by application of the present invention can be resuscitated by flushing their vascular system with body fluid or substituted body fluids that have been warmed to near body temperature, as exemplified by the physiological saline described above, artificial blood and/or natural blood. The resuscitated organs or tissues collected from them are believed to be transplantable to the human body. Nerve tissue and other living tissues and cells can be collected from the resuscitated organs and used for testing purposes as in a pharmacological test.

Another possible application of the invention is to organs of mammals except humans that can be used as heterologous transplants to the human body and by this application the invention provides an effective technique for preserving animal organs that are expected to find increasing demand in clinical settings to deal with the shortage of human donors. In particular, the invention is also useful for preserving mass-producible organs such as the heart, liver and pancreas from cultured pigs; thus, the invention will provide an effective preservation technique that can withstand transport for a long time, particularly air transport for a period longer than ten-odd hours.

A technique to provide a prolonged storage period of organs according to the invention will be utilized to establish an organ bank. The invention will also find utility in application to the storage of tissues and organs that have been reconstituted by cultivating stem cells having totipotency such as embryonic stem cells taken from blatocysts. The invention may find further applicability to the storage of nerve tissues in the brain and other organs.

### DEFINITION

"Removing or depriving of water in an amount of at least about 10%" or "removing or depriving of water in an amount of at least about 25%" means removing the body fluid in the vascular system, as well as the free water present in and between individual cells. "Leaving at least from about 10 to about 20% of water" shall be taken to mean that after removal of water, the organ still contains a sufficient amount of water to permit later resuscitation, inclusive of the bound water in the living tissue. The freshness of stored organs is believed to depend primarily on the amount of free water and to prolong the preservation period, it is theoretically preferred to remove free water as much as possible. To maintain resuscitability, it is preferred to ensure that water is left intact in a range of amounts that enable the maintenance of bound water. Bound water may be defined as the water in which the state of hydration or crystallization can be observed, and free water as the water other than bound water.

In anatomy, vascular systems are classified into two groups, the blood vessel system and the lymphatic system. For the purposes of the invention, nutrition blood vessels through which water and nutrients are supplied to individual cells in the organ of interest can preferably be used as the "the vascular system". In the case of the heart, the irrigation apparatus may be connected to inherent vascular vessels leading to the atria and ventricles so that flow pressure is applied indirectly to the coronary arteries and veins leading to the nutrition blood vessels in the heart. Besides the nutrition vessel system, organs such as the liver have a functional blood vessel system associated with portal vein circulation; in such organs, the functional blood vessel system may be substituted for the nutrition vessel system.

"Organ having a physiologically normal water content" is typically an organ as extracted from the living body. If the method of the invention includes the step of blood removal, this term can be taken to mean an organ whose blood has been replaced by physiological saline as a result of irrigation performed to effect blood removal. The degree of dehydration can be specified with reference to the weight of "organ having a physiologically normal water content".

The physiological saline to be used in blood removal is a substitute body fluid having similar physiological activity to blood and typical examples are known Ringer's solutions such as KH (Kreps-Henseleit) solution. Polysaccharides that will help stabilize the dehydrated biostructure may be dissolved in physiological salines of this class. A preferred polysaccharide having this ability is trehalose. Other biostructure stabilizing substances that can be dissolved in physiological saline include malic acid, mannitol, glycerol, and amino acids such as glycine betaine, proline and ectoine.

The inert medium to be used in the invention is a medium that is insoluble in water and oils and fluorocarbons that are liquid at the temperature for preservation are preferred, with a liquid perfluorocarbon being particularly preferred. If similar conditions are satisfied, other forms of inert medium may be used such as gas, sol and gel. Other inert media that are believed to be useful include mercury and silicone oil.

### BRIEF DESCRIPTION OF THE DRAWINGS

Fig. 1 is a surfacecardiac electrocardiogram (SECG) recorded in Experiment 8 of Example 3;
Fig. 2 is an SECG recorded in Experiment 9 of Example 3;
Fig. 3 is an SECG recorded in Experiment 1 of Example 4;
Fig. 4 is an SECG recorded in Experiment 2 of Example 4;
Fig. 5 is an SECG recorded in Experiment of Example 5.

### THE PREFERRED EMBODIMENT OF THE INVENTION

### An embodiment of the present invention comprising a dehydration step via a vascular system:

Upon contact with gases or exposure to low 5 temperature, blood usually clots to form thrombi and this is an obstacle to the subsequent steps of dehydration and resuscitation. To eliminate this possibility, the organ to be preserved, for example, an organ extracted in surgery is washed to remove blood. The known Langendorff apparatus may be used to effect perfusion for blood removal. The technique of irrigation for blood removal is known to the skilled artisan as the Langendorff method (see Doring H.J. and Dehnert H.; Biomesstechnik-Verlag Match Gmb, Germany 1988). According to the Langendorff method, an irrigation 5 catheter (or cannula) is attached to the aorta in the blood vessel system of the organ and a mixture of trehalose and KH solution is sent into the blood vessel system to replace the blood in the organ with the physiological saline. The physiological saline is preliminarily aerated to ensure that the organ is supplied at all times with a fresh substitute body fluid. During the blood removal by irrigation, the organ is cooled to 1 - 8°C to stop its activity. The blood removal step follows the dehydration step.

The dehydration or water-removal step can be accomplished by means of the Langendorff apparatus used in the step of blood removal. For example, the aorta in the organ that has been subjected to the necessary blood removal is supplied with a suitable gas rather than physiological saline at a specified flow pressure from this irrigation apparatus. It will be readily understood by the skilled artisan that the artificial means of irrigation include not only a device for one-way supply of the gas through the aorta but also a closed circulation system connected between the aorta and venae cavae. Thus, the perfusion with gas is not limited to the forcing of the gas and it may be aspirated through the vascular system.

If the flow pressure created by the irrigation apparatus is applied to the vascular system of the organ, the physiological saline flows out of the organ through the venae cavae to cause progressive dehydration. Preferably, the gas entering blood vessels flow through individual capillaries toward the venae cavae and the water both within and between individual cells is forced under its own vapor pressure to enter the gas flowing through the blood vessels. Eventually, most of the free water within tissues and cells flows through the blood vessel system to be discharged to the outside of the organ.

Unlike the treatment by contact with a dehydrator, dehydration via the blood vessel system utilizes the extremely large surface area of the capillaries distributed uniformly in the organ, and the intended tissue and individual cells can be dehydrated in a fairly short period of time although slowly. This advantage is obvious from the smaller extent of unevenness in dehydration and from the by-no-means unbearable change in the color of the dehydrated organ. As will be shown in the examples to be given later in this specification, dehydration by irrigation with gas achieved markedly high resuscitation ratio, indicating significant improvements in the state of resuscitation. As further advantages, dehydration with gas is an active treatment that can be controlled externally, which puts less stress on organs that must be handled rapidly but carefully, and which is very efficient.

Inexpensive compressed gases packed in commercially available containers may be forced into the vascular system. In the case of an O₂-CO₂ gaseous mixture, the CO₂ content is preferably less than 5%. Dry gases were used in the Examples to be described later in this specification but humid gases may of course be used. More preferably, the dehydrating gas may be chosen from inert gases such as N₂, He, Ar, Ne, Kr and Xe. Among the inert gases, Xe is expensive but considering its reported anesthetic action on living tissues, the advantage of using Xe as the dehydrating gas would be great. The use of inert gases has the added advantage of avoiding damage that may be caused to living tissues by active oxygen.

The dehydration by perfusion with gas may be combined with the ancillary method of dehydration by bringing the organ into direct or indirect contact with a dehydrator.

If dehydration is performed using a dehydrator, a convenient way is by adjusting the dehydrator to a desired volume and immersing it in an inert medium together with the organ. Specifically, the organ as surrounded with silica gel, molecular sieve, zeolite or the like is placed in a metal cage, a synthetic fiber net or other casings that are made of materials neutral to the inert preserving medium, and then immersed in the inert medium.

The amount of the dehydrator to be used can be calculated from the percentage of water removal that is required by the organ of interest. After immersion in the inert medium, the dehydrator may be removed or replaced on a suitable timing; if necessary, an additional amount of the dehydrator may be added.

In the experiments the present inventor conducted using tardigrades, 100% resusictation was achieved when dehydration was performed in a highly humid environment, preferably at a humidity of 80%. Considering this fact, it would also be preferred to dehydrate organs at high humidity.

To give guide figures as the conditions for perfusion with gas, the aorta in the heart of a rat is perfused with air at a flow rate of ca. 0.05 - 0.2 kgf/cm² (ca. 4.9 - 19.6 kPa), preferably ca. 0.1 kgf/cm² (ca. 9.8 kPa), for a period of at least 1 - 1.5 hours. By means of perfusion with this amount of air, at least 25 mass% water removal can be achieved as contrasted with the total weight of the organ that is about to be dehydrated.

The organ about to be dehydrated contains the substitute body fluid and has a physiologically normal water content. For extended storage of the organ, the largest possible amount of free water should be removed. In the present invention, the amount of water to be removed is defined in terms of percent water removal (weight ratio) with reference to the total weight of the organ and expressed by the following equation:$\text{Percent water removal (weight ratio) = 100 - [(total} \text{weight of the organ after dehydration/} \text{total weight of the organ before dehydration) x 100]}$

The state of dehydration may be defined by other methods such as NMR which specifies the absolute amount or the state of the molecules of water present in the organ of interest. NMR is a technique most widely used by scientists to study the state of water in living tissues.

The first NMR-based study of the water in living tissues was reported by Belton, P.S., Jackson, R.R. and Packer, K.J. in Pulsed NMR Studies of Water in Strained Muscle, I. Transverse Nuclear Spin Relaxation Times and Freezing Effects; Biochem. Biophys. Acta. 286:16-25 (1972). A structural analysis of water by NMR was reported by Hazlewood, C.F., Chang, D.C., Woessner, D.E. and Nichols, B.C. in Nuclear Magnetic Resonance Transverse Relaxation Times of Water Protons in Skeletal Muscle; Biophys. J. 14:583-605 (1974).

Belton et al. concluded that the molecules of water in living tissues consisted of three states, ca. 8% of which was bound water, or water bound to biomolecules such as the intima of cell membranes as well as proteins and nucleic acids, ca. 82% being free water, and the remaining 10% was occupied by free water bordering on the outside of cell membranes. The bound water differs from other molecules of water in that it has certain preferential orientations in several molecular layers based on the molecules of water directly bound to biopolymers.

Typically, it is understood that about 10 - about 20% of the total water content in the living tissue is occupied by bound water and about 80 - about 90% by free water. The total content of water in the heart of a rat is typically about 80 mass% of the total weight of the organ, so the contents of bound water and free water are respectively 8 - 16 mass% and 64 - 72 mass%.

In the step of dehydrating the heart of a rat, water is removed in an amount of about 25 - 60 wt% of the total weight of the organ and if this is the case, it is reasonable to think that all the water removed is free water.

Hence, as the result of dehydration, the mass of the free water remaining in the rat's heart will drop to a level on the order of several to forty percent but the absolute amount of bound water remains the same. Although the actual water content slightly varies depending on the animal species and the type of the organ to be preserved, removing free water in an amount of at least about 25% by weight of the total weight of the organ before dehydration is sufficient to leave at least about 10 - 20% by weight of water (including bound water) intact on the basis of the total water content before dehydration.

While the percentage of free water removal that is tolerated by organs may vary with the type of the organ to be preserved, the intended duration of storage and other conditions for preservation, about 25 - 35% is currently considered safe for the heart of rats and if prolonged storage is intended. About 10 - 50%, preferably about 15 - 25% of water removal is currently suitable for swine hearts.

As of today, no full explanation has been proposed for the mechanism connecting the above-described state of dehydration to the increase in the period of organ preservation. The present inventor has at least shown that the increase in the period of organ preservation does not depend on the composition of the preserving fluid but depends largely on the absolute amount of water molecules in the tissues or cells of the organ. Since the organ that ceased to show signs of substantial life activity as the result of dehydration of its tissues and cells later resuscitated, the organ may well he considered to have reached "apparent death", which may be called "immortal state" or more academically "cryptobiotic state" (Vreeland H.R. et al; Nature, Vol. 407, pp. 897-900, 19 Oct. 2000: Cano J.R. et al.; Science, Vol. 268, pp. 1060-1064, 19 May 1995).

### Step of preservation:

The dehydrated organ is preserved in a perfluorocarbon which is an inert medium insoluble in water and oils. The organ is immersed in the inert medium generally in a closed state at atmospheric pressure, optionally under superatmospheric pressure. As already mentioned, the organ may be immersed in the inert medium together with the dehydrator. The inert medium is preferably aerated with pure oxygen.

"At a chill temperature or below" as used herein means the range of from about +1 to about +8°C, preferably in the neighborhood of about +2 to about +4°C. The organ is maintained in this preserved state for a predetermined number of days. If the free water in the organ is adequately removed, it can theoretically be stored frozen as in liquid nitrogen.

### Step of resuscitation:

To resuscitate the organ from the preserved state, the already mentioned Langendorff method can be employed. First, the preserved organ is taken out of the perfluorocarbon and the dehydrator, if any, is also removed. The organ is then immersed in a KH solution, preferably aerated with pure oxygen, within a Petri dish at +4°C. A perfusion catheter is fixed to the aorta in the organ and the KH solution, preferably aerated continuously with a gaseous mixture of O₂ and CO₂ and warmed to 37°C, is forced by an irrigation pump into the catheter at a constant flow rate. The organ is resuscitated by this procedure of irrigation.

One of the important aspects of preserving mammalian organs is the need for post-storage verification of viable tissues in the organ. This can be accomplished by several methods including tissue autopsy, actual transplant and electrophysiology. Whichever method is adopted, it must be determined whether each type of tissue cell is alive. In the present invention, electrophysiological verification of tissue cell resuscitation was conducted by taking SECGs because they could provide real-time recording of the activity of nerve cell tissue and cell death could be found to have occurred at the point in time when neuron activity disappeared. As an ancillary means, the visual change in the color of the organ tissues and the presence of beats (in the case of the heart) could be monitored to complete the verification of organ resuscitation.

### An embodiment of the invention comprising the formation of an oil film and water removal by exposure to gas:

According to another aspect of the present invention, the above-described dehydration through the vascular system is replaced by the evaporation of moisture through gas exposure of the organ. The steps of blood removal and resuscitation are basically the same as in the first aspect of the invention which involves the above-described dehydration through the vascular system. In this second aspect of the invention which relies upon gas exposure, the step of preservation may or may not adopt the above-described method of immersing the organ within an inert medium. In the latter case where the organ is not immersed within an inert medium, the dried organ is maintained at a chill temperature in a gas of an appropriate humidity for a desired period of preservation.

The blood-removed organ is removed from the perfusion apparatus together with the cannula and immersed lightly within oil. An oil film is formed on the entire surfaces of the organ. The formation of an oil film can prevent erratic drying of the extracted heart which is likely to occur if moisture is removed under a drying gas, as well as the resulting shrinkage and cornification of the surface of the heart.

The oil to be used is preferably harmless to organs and has a sufficient viscosity to form an appropriate thickness of oil film on the surface of the organ; it is typically a silicone oil. The silicone oil is an organosilicon oxide polymer and physiologically it is an almost harmless and chemically inert substance. The silicone oil used in the examples to be described later was nonvolatile at a kinetic viscosity of 100 mm²/S (25°C) and it is believed to be suitable for protecting the surface of the heart against excessive drying over a prolonged period. When an oil film is formed on the surface of the heart, one can confirm visually that physical damage such as cracking in the surface of the heart which will occur in the absence of oil can be relieved.

The gas to be used is typically air or a gaseous mixture of O₂ and CO₂ but these are not the sole examples. As a drying gas, a gaseous mixture of O₂ and CO₂ is preferred.

As will be shown in the examples to be given later, a preserving gas may contain Xe (xenon). Xenon is a nonpolar inert gas and capable of undergoing hydrophobic hydration with the surrounding water to suppress the thermal motion of water molecules. As water becomes more structured and its molecular motion slows down, its viscosity increases. Since the biological reactions are mediated by water, the increase in the viscosity of water is believed to suppress the metabolism of cells. If the removal of free water and the maintenance of the organ at cold temperature are combined with the use of xenon as the preserving gas, the metabolism of the organ is further suppressed.

In addition, xenon has a dissociation pressure (0°C) of 1.15 atm (0.1115 MPa) and is known to be capable of forming a gaseous hydrate at comparatively low pressurization. Therefore, if xenon is to be used, it is recommended to preserve the organ under pressure. In a pressurized environment, xenon is believed to have higher solubility in the aqueous phase in the organ (including the inside and outside of cells). If xenon surrounding the organ is pressurized, the structuring of water within the organ is promoted, probably causing marked suppression of its metabolism.

In an exemplary method of dehydration that relies upon gas exposure, a silica gel desiccant is put into a closed gas vessel and maintained at a chill temperature; thereafter, a blood removed organ is put into the vessel and exposed to a dried gas over a specified time. The degree of dehydration to be achieved varies with the weight of the organ and ranges from 10 to 50 wt% of its total weight before dehydration. It should be noted that under identical drying conditions, the degree of dehydration that can be achieved depends on the size (e.g. weight) of the organ and it is believed preferable to apply drying conditions in consideration of that factor.

The time to achieve dehydration varies with the weight of the organ and the amount of the desiccant. If the organ is a rat's heart, the time of dehydration ranges from about 24 to about 48 hours and if it is a swine heart, the range is about 1 week. However, the drying time is by no means limited to those values. After those respective drying times, it is recommended to store the organ in an inert medium. By this drying method, a high degree of dehydration that is desirable for prolonged storage can be achieved without damaging the organ. Suffering only a small damage, the organ can be resuscitated very efficiently after preservation for a comparatively short period and the percent resuscitation increases even after prolonged storage.

In Example 4 to be described later, a swine heart could successfully be resuscitated after the passage of 37 days. If stored at chill temperature as in the prior art, organs would have putrefied within that period but the myocardial tissue of the organ was verified to have resuscitated.

### EXAMPLE

### Example 1 (Preservation of rat's hearts after dehydration through vascular system)

Seven-week old male Wistar rats (300 g) were artificially reproduced in compliance with the American NIH standards for laboratory animals.

Rats were administered Nembutal (0.25 mL) and heparin sodium salt (5 mg) by intraperitoneal injection. After measurement of their body weight, the heart was extracted from each animal. The extracted heart was placed in a homothermal tank and a catheter was inserted into the aorta; thereafter, using a KH solution mixed with trehalose (117 mmol) and aerated with a gaseous mixture of 95% O₂ and 5% CO₂, irrigation for blood removal was performed by the Langendorff method. The temperature of the homothermal tank was lowered to stop the beating of the heart, thereby completing the process of blood removal by irrigation.

After measuring the weight of the heart, the same irrigation apparatus was used to feed the gaseous mixture of 95% O₂ and 5% CO₂ into the heart, thereby starting dehydration. While monitoring the percent water removal as calculated from the measurements of heart's weight, dehydration was continued for about 1 hour and a half, whereupon the gas irrigation was stopped. Before the heart weight was measured, it was wiped so that water existing on the surface was removed.

The dehydrated heart was immersed in a liquid perfluorocarbon (C8F17; FLUORINERT FC77 of Sumitomo 3M) at 4°C which had been aerated with pure oxygen for one minute; the heart was then placed in a hermetically sealed 500-mL jar and stored in a refrigerator.

After the preservation period, a catheter was inserted into the aorta of the heart and an attempt was made to resuscitate the heart by Langendorff irrigation using a warm KH solution aerated with the gaseous mixture of O₂ and CO₂.

### - Experiment 1 (4-hr. storage)

### R349 (5-week old male Wistar rat): Storage for 4 hours

### September 11, 2000 at 24°C

- 15:39: body weight measured: 130 g
- 15:51: extraction of the heart started
- 15:53: extraction of the heart and insertion of catheter ended
- 15:53: blood removal by irrigation started: homothermal tank held at 5.0°C and irrigation effected at flow rate of 1.0 - 3.8 mL/min
- 16:14: the heart stopped beating and blood removal by irrigation ended: homothermal tank held at 5.0°C and the heart was at 18.2°C
- 16:14: heart's weight measured: 0.663 g
- 16:18: dehydration started by irrigation with O₂/CO₂: gas pressure at 0.05 kgf/cm² and homothermal tank held at 2.8°C
- 16:48: heart's weight measured: 0.516 g at 22.2% water removal
- 16:50: dehydration continued: gas pressure at 0.05 kgf/cm² and homothermal tank held at 1.1°C
- 17:20: heart's weight measured: 0.458 g at 30.9% water removal
- 17:21: dehydration continued: gas pressure at 0.05 kgf/cm² and homothermal tank held at 1.6°C
- 17:51: heart's weight measured: 0.394 g at 40.6% water removal
- 17:55: 4-hr storage in PFC: 0.6°C
- 21:54: storage ended and the heart recovered at 26°C
- 21:55: heart's weight measured: 0.436 g
- 21:55: irrigation for resuscitation started: homothermal tank held at 34.4°C and irrigation effected at flow rate of 1.0 - 3.8 mL/min
- 23:40: irrigation for resuscitation ended: homothermal tank held at 33.7°C
Assessment: Faint contraction of the cardiac muscle occurred at 4 minutes after the start of KH irrigation but there was no atrial movement. The cardiac muscle continued to move until the irrigation was stopped. The heart swelled slightly.

### - Experiment 2 (8-hr. storage)

### R350 (5-week old male Wistar rat): Storage for 8 hours

### September 12, 2000 at 25°C

- 19:10: body weight measured: 150 g
- 19:20: extraction of the heart started
- 19:22: extraction of the heart and insertion of catheter ended
- 19:22: blood removal by irrigation started: homothermal tank held at 5.0°C and irrigation effected at flow rate of 1.0 - 3.8 mL/min
- 19:37: the heart stopped beating and blood removal by irrigation ended: homothermal tank held at 4.6°C and the heart was at 15.7°C
- 19:39: heart's weight measured: 0.718 g
- 19:43: dehydration started by irrigation with O₂/CO₂: gas pressure at 0.1 kgf/cm² and homothermal tank held at 4.4°C
- 20:13: heart's weight measured: 0.647 g at 9.9% water removal
- 20:15: dehydration continued: gas pressure at 0.1 kgf/cm² and homothermal tank held at 2.4°C
- 20:35: heart's weight measured: 0.550 g at 23.4% water removal
- 20:48: dehydration continued: gas pressure at 0.05 kgf/cm² and homothermal tank held at 4.8°C
- 20:18: heart's weight measured: 0.483 g at 32.7% water removal
- 17:55: 8-hr storage in PFC: 0.6°C

### September 13, 2000

- 05:21: storage ended and the heart recovered at 27°C
- 05:23: heart's weight measured: 0.523 g
- 05:24: irrigation for resuscitation started: homothermal tank held at 33.6°C and irrigation effected at flow rate of 1.0 - 3.8 mL/min
- 07:25: irrigation for resuscitation ended: homothermal tank held at 36.6°C
Assessment: Starting at 05:29, the cardiac muscle contracted vigorously but that event stopped in about 10 seconds. Around 06:00, the right side of the heart was found to move faintly in the area near the pulmonary artery. The heart swelled considerably and from appearances it was hardly found beating; however, when the irrigation was stopped and the heart was drained of the KH solution, distinct beating was observed.

### - Experiment 3 (16-hr. storage)

### R350 (5-week old male Wistar rat): Storage for 16 hours

### September 13, 2000 at 245°C

- 16:22: body weight measured: 120 g
- 16:28: extraction of the heart started
- 16:31: extraction of the heart and insertion of catheter ended
- 16:31: blood removal by irrigation started: homothermal tank held at 26.9°C and irrigation effected at flow rate of 1.0 - 3.8 mL/min
- 16:44: the heart stopped beating and blood removal by irrigation ended: homothermal tank held at 4.6°C and the heart was at 16.2°C
- 16:45: heart's weight measured: 0.605 g
- 16:50: dehydration started by irrigation with O₂/CO₂: gas pressure at 0.1 kgf/cm² and homothermal tank held at 3.3°C
- 17:20: heart's weight measured: 0.534 g at 11.7% water removal
- 17:23: dehydration continued: gas pressure at 0.1 kgf/cm² and homothermal tank held at 1.3°C
- 17:53: heart's weight measured: 0.517 g at 14.5% water removal
- 17:55: dehydration continued: gas pressure at 0.2 kgf/cm² and homothermal tank held at 0.5°C
- 18:25: heart's weight measured: 0.522 g at 13.7% water removal
- 18:30: 16-hr storage in PFC: 2.8°C

### September 14, 2000

- 10:28: storage ended and the heart recovered at 25°C
- 10:30: irrigation for resuscitation started: homothermal tank held at 32.9°C and irrigation effected at flow rate of 1.0 - 3.8 mL/min
- 17:25: irrigation for resuscitation ended: homothermal tank held at 34.5°C
Assessment: The heart swelled so extensively that the state of its beating was not clear at all and this made the recording of an SECG necessary.

### - Experiment 4

### Rat R443 (24-hr. storage)

### February 6, 2001

- 16:10: the heart extracted
- 16:20: blood removal by irrigation started: homothermal tank first held at 26.8°C and ended at 7.9°C
- 16:45: blood removal by irrigation ended and heart's weight measured: 0.582 g
- 16:45: the heart was immersed in PFC as it was flushed with air (0.1 kgf/cm²) through the aorta

### February 7, 2001

- 16:48: the heart recovered from PFC
- 16:50: heart's weight measured: 0.430 g at 26.1% water removal
- 16:50: irrigation with KH solution started: homothermal tank first held at 27.0°C and ended at 35.5°C
- 18:30: the heart was found to resuscitate with consistent beasting

### - Experiment 5

### Rat R444 (24-hr. storage)

### February 7, 2001

- 18:55: Nembutal (0.2 mL) administered
- 18:57: heparin sodium (5 mg) administered
- 18:57: body weight measured
- 19:00: the heart extracted
- 19:03: flushing with trehalose in KH solution started: homothermal tank first held at 27.6°C and ended at 5.5°C
- 19:23: irrigation ended and heart's weight measured: 0.767 g
- 19:27: flushed with air in jar (0.1 kgf/cm², 0.8°C)
- 19:57: irrigation ended and heart's weight measured: 0.483 g at 34.8% water removal
- 20:00: the heart immersed in PFC

### February 8, 2001

- 20:25: the heart recovered from PFC (0.5°C)
- 20:27: heart's weight measured
- 20:27: flushing with KH solution started: homothermal tank first held at 26.9°C and ended at 35.4°C
- 21:27: the heart was found to resuscitate and beat several times before coming to complete stop

### Example 2 (Preservation of rat's hearts after dehydration through vascular system)

Five-week old male Wistar rats were reproduced in compliance with the American NIH standards for laboratory animals. Five rats were used in each of the following experiments. Perfluorocarbon (PFC) was used as an inert medium.

### - Experiment 1 (4-hr storage)

The rats were administered intraperitoneally first with Nembutal (0.2 mL), then with a solution of heparin sodium (5 mg) in physiological saline (0.3 mL). Each rat was incised in the chest and the heart was removed. A catheter was inserted into the aorta of the heart and ligated with cotton thread. The heart was then set on a fixed-flow perfusion apparatus and flushed with a KH solution having trehalose (117 mmol) dissolved therein; the irrigation temperature was 27°C and the flow rate of the KH solution was 3.2 mL/min. The KH solution was constantly aerated with a gaseous mixture of 95% O₂ and 5% CO₂. The temperature of the flushing fluid was gradually lowered until the heart stopped beating. After measuring the its weight, the heart was dried by flushing with air gas through the catheter at a flow rate of 0.1 kgf/cm². After measuring its weight, the dry heart was preserved within PFC held at 4°C as it was constantly aerated with an O₂/CO₂ mixture. After 4 hours, the heart was taken out of the preservation fluid, set on the fixed-flow irrigation apparatus and flushed with a KH solution as it was constantly aerated with an O₂/CO₂ mixture; the temperature of the KH solution was 27°C and it was flushed at a flow rate of 3.2 mL/min. As is well known, when the preserved heart is subjected to another irrigation, it will resuscitate spontaneously and neuron activity will appear if the tissue cells are still alive. Electrodes were attached to the resuscitated heart and an SECG was recorded with a pen oscillograph.

### - Experiment 2 (16-hr storage)

The procedure of Experiment 12 was repeated except that the duration of storage was extended to 16 hours.

The time of gas irrigation and the percent water removal achieved for each rat are shown below.

| | | |
|---|---|---|
| Experiment 1 | 1-1 | 1 hr and 34 min, 44.1% |
| | 1-2 | 2 hr and 37 min, 32.8% |
| | 1-3 | 2 hr and 37 min, 44.4% |
| | 1-4 | 2 hr and 37 min, 47.5% |
| | 1-5 | 3 hr and 7 min, 41.1% |
| Experiment 2 | 2-1 | 1 hr and 35 min, 44.4% |
| | 2-2 | 2 hr and 37 min, 41.2% |
| | 2-3 | 1 hr and 3 min, 45.8% |
| | 2-4 | 3 hr and 12 min, 41.3% |
| | 2-5 | 2 hr and 9 min, 41.4% |

Result: The resuscitation ratio was 100% in both Experiments 1 and 2. In each of Experiments 1 and 2, there were significant variations in the relationship between the time taken to remove water and the actual percent water removal. A probable reason is that one extracted heart had a different state from another sample. Air as supplied through the catheter inserted into the aorta would pass through the openings of the right and left coronary arteries to fill the capillaries in the cardiac muscle, thereby drying its cells. However, if the slightest thrombus formation occurs in capillaries, the air gas will not reach the cells farther ahead; this would be the reason for the lack of proportionality between the time taken to remove water and the actual percent water removal. Whatever the reason, it was quite surprising that the hearts of rats deprived of water at 40% or more resuscitated at 100% probability after preservation for 4 or 16 hours.

### Example 3 (Preservation of rat's hearts after dehydration by exposure to gas)

In this example, silicone oil was applied to hearts extracted from rats and the coated hearts were stored in a pressurized drying gas at 4°C for 3 days.

The rats used in this example were 7-week old male Wistar rats (300 g) reproduced artificially in compliance with the American NIH standards for laboratory animals. Hearts were extracted from those rats and after bleeding them, 2 ml of a heart muscle protecting fluid (Miotecter, product of Mochida Pharmaceutical) was injected through a catheter to cause cardiac arrest. Silicone oil (WF·30, product of Wako Pure Chemical) was applied to the surface of each heart that had completed irrigation and the heart was put into a standardized bin (60 ml) after wrapping it with sterile gauze (120 x 120 mm). The heart-containing bin was placed in a pressure chamber on the bottom of which a silica gel layer had been spread and the chamber was then sealed hermetically. After purging with a gas mixture (95% O₂ and 5% CO₂), the chamber was kept supplied with the gas mixture until the internal pressure was 0.2 Mpa. After that treatment, the chamber was stored in a refrigerator at 4°C.

As required, the chamber was opened at every 24 hours and another film of silicone layer was applied to the extracted heart. After the passage of a specified period, the heart was taken out of the silicone oil bath in the chamber and reset in a fixed-flow perfusion apparatus. An irrigation fluid supplied from an irrigation fluid reservoir that was filled with a KH solution being continuously aerated with a gaseous mixture of 95% O₂ and 5% CO₂ was fed into an aorta catheter at a constant pressure (ca. 60 mmHg). The extracted heart began to be irrigated at 37°C. During the irrigation, SECG electrodes were attached at the left ventricle and the opening of aorta, and with a bipolar lead, SECGs were recorded continuously using an organic amplifier (Bioview-E of NEC-Sanei).

The basic procedure may be summarized as follows.
1. The extracted heart is immersed in a KH solution in a Petri dish.
2. Within the Petri dish, a cannula is inserted into the aorta and fixed with cotton thread.
3. The cannula is mounted on a fixed-flow Langendorff perfusion apparatus and a KH solution is irrigated through the heart for removing blood. The irrigating KH solution is supplemented with 20 x 10⁴ U/L of penicillin potassium. The irrigation temperature is about 37°C and the irrigation pressure is 60 mmHg.
4. After 20-min irrigation, about 2 ml of a liquid cardiac arrester (heart muscle protecting fluid) is irrigated through the heart to induce cardiac arrest.
5. The heart is removed from the perfusion apparatus together with the cannula and after wiping off the moisture from the surface with gauze, the weight of the heart is measured.
6. The heart is immersed lightly in silicone oil to form a silicone oil layer on the surface.
7. Gently wrap the heart with gauze and put it into a container.
8. Place the container of the heart into a pressure chamber. The bottom of the chamber is preliminarily lined with silica gel.
9. Seal the chamber hermetically and fill it with a gas mixture (95% O₂ and 5% CO₂) until the internal pressure is 0.3 MPa. Xenon gas may optionally be used (e.g. ca. 0.1 MPa of xenon and 0.2 MPa of the gas mixture).
10. After the stated pressure is obtained, the chamber as it holds the container of the heart is put into a refrigerator and stored at 2-4°C.
11. After 3 days, the chamber is taken out of the refrigerator and vented of the gas.
12. The chamber is opened, the heart is taken out and its weight is measured.
13. The heart is mounted on a fixed-flow Langendorff perfusion apparatus and irrigation is started. Typically, the irrigation temperature is 37.0°C and the irrigation pressure is 60 mmHg.
14. After confirming that the heart has resuscitated, SECGs are taken from the surface of the heart.

Depending on the sample, the gas to be supplied into the chamber or the drying period was changed. The sample that passed through the drying period was immersed in a preserving fluid (silicone oil/PFC) and stored within the chamber under superatmospheric pressure as in the case of drying.

Shown below are the experiments in which resuscitation of the heart was verified in the application of the method described above.

### - Experiment 1

Weight of the heart before preservation: 1.46 g
Time and date on which the preservation was started: 21:07 on December 30, 2001
Gas used: Gas mixture at 0.3 MPa
Time and date on which resuscitation was started: 16:09 on January 2, 2002
Weight of the heart before start of resuscitation: 0.97 g (35% moisture removed in 3 days)

### - Experiment 2

Weight of the heart before preservation: 1.29 g
Time and date on which the preservation was started: 21:07 on December 30, 2001
Gas used: Gas mixture at 0.3 MPa
Time and date on which resuscitation was started: 17:42 on January 2, 2002
Weight of the heart before start of resuscitation: 0.89 g (35% moisture removed)

### - Experiment 3

Weight of the heart before preservation: 1.37 g
Time and date on which the preservation was started: 19:20 on January 8, 2002
Gas used: Gas mixture at 0.2 MPa plus Xe at 0.1 MPa
Time and date on which resuscitation was started: 14:34 on January 11, 2002
Weight of the heart before start of resuscitation: 0.98 g (32% moisture removed)

### - Experiment 4

Weight of the heart before preservation: 1.41 g
Time and date on which the preservation was started: 19:20 on January 8, 2002
Gas used: Gas mixture at 0.2 MPa plus Xe at 0.1 MPa
Time and date on which resuscitation was started: 15:42 on January 11, 2002
Weight of the heart before start of resuscitation: 1.10 g (27% moisture removed)

### - Experiment 5

Weight of the heart before preservation: 1.60 g
Time and date on which the preservation was started: 10:16 on January 9, 2002
Gas used: Gas mixture at 0.2 MPa plus Xe at 0.1 MPa
Time and date on which resuscitation was started: 17:42 on January 12, 2002
Weight of the heart before start of resuscitation: 0.94 g (46% moisture removed)

### - Experiment 6

Weight of the heart before preservation: 1.63 g
Time and date on which the preservation was started: 19:13 on January 15, 2002
Gas used: Gas mixture at 0.3 MPa
Time and date on which resuscitation was started: 13:49 on January 18, 2002
Weight of the heart before start of resuscitation: 1.12 g (31% moisture removed)

### - Experiment 7

Weight of the heart before preservation: 1.41 g
Time and date on which the preservation was started: 19:13 on January 15, 2002
Gas used: Gas mixture at 0.3 MPa
Time and date on which resuscitation was started: 16:02 on January 18, 2002
Weight of the heart before start of resuscitation: 1.04 g (35% moisture removed)

### - Experiment 8

Weight of the heart before preservation: 1.43 g
Time and date on which the preservation was started: 19:20 on January 8, 2002
Gas used: Gas mixture at 0.2 MPa plus Xe 0.1 MPa
5 Time and date on which resuscitation was started: 18:54 on January 11, 2002
Weight of the heart before start of resuscitation: 1.07 g (28% moisture removed)

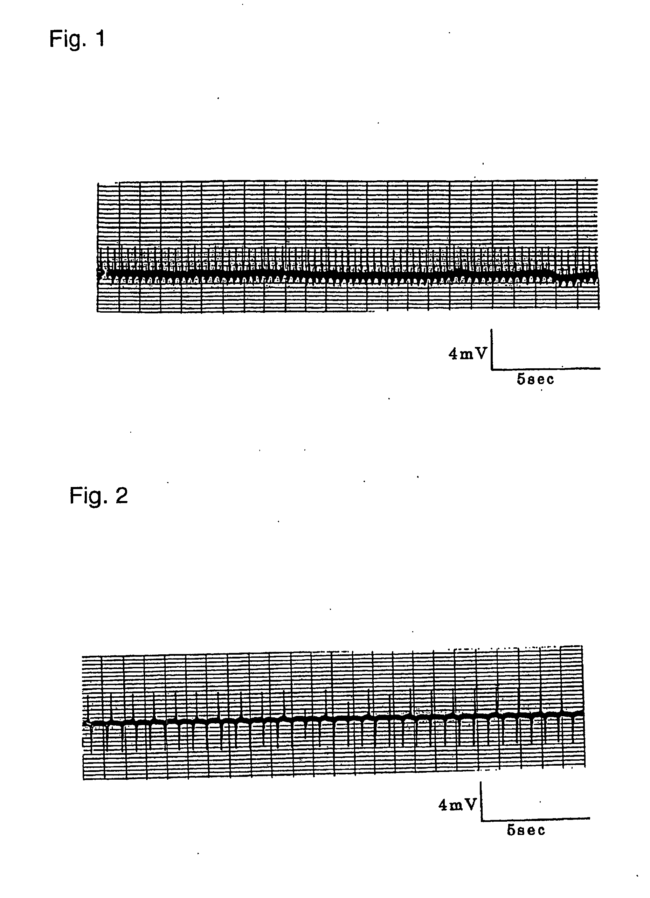

Fig.1 is an SECG obtained in Experiment 8 (at 21:04).

### - Experiment 9

Weight of the heart before preservation: 1.61 g
Time and date on which the preservation was started: 20:16 on January 9, 2002
Gas used: Gas mixture at 0.2 MPa plus Xe at 0.1 MPa
Time and date on which resuscitation was started: 19:18 on January 12, 2002
Weight of the heart before start of resuscitation: 1.00 g (42% moisture removed)
Fig. 2 is an SECG obtained in Experiment 9 (at 20:25).

### Example 4 (Preservation of swine-hearts after dehydration by exposure to gas)

In this example, swine hearts were dehydrated by exposure to a gas mixture and stored for 7-8 days under the same gas mixture.

### - Experiment 1 (for 7 days)

Weight of the heart before preservation: 31.9 g
Date on which the preservation was started: February 16, 2002
Oil used: silicone oil
Gas used: gas mixture (not pressurized)
Procedure: The heart coated with the oil was wrapped in a polyurethane foam and put into a container (bin), which was placed into a chamber and purged with the gas mixture. The chamber was then put in a refrigerator and maintained at a chill temperature of 2-4°C. The organ was taken out every other day and recoated with the silicone oil. Date on which resuscitation was started: February 23, 2002 Weight of the heart before the start of resuscitation: 25.6 g (19.7% moisture removed)

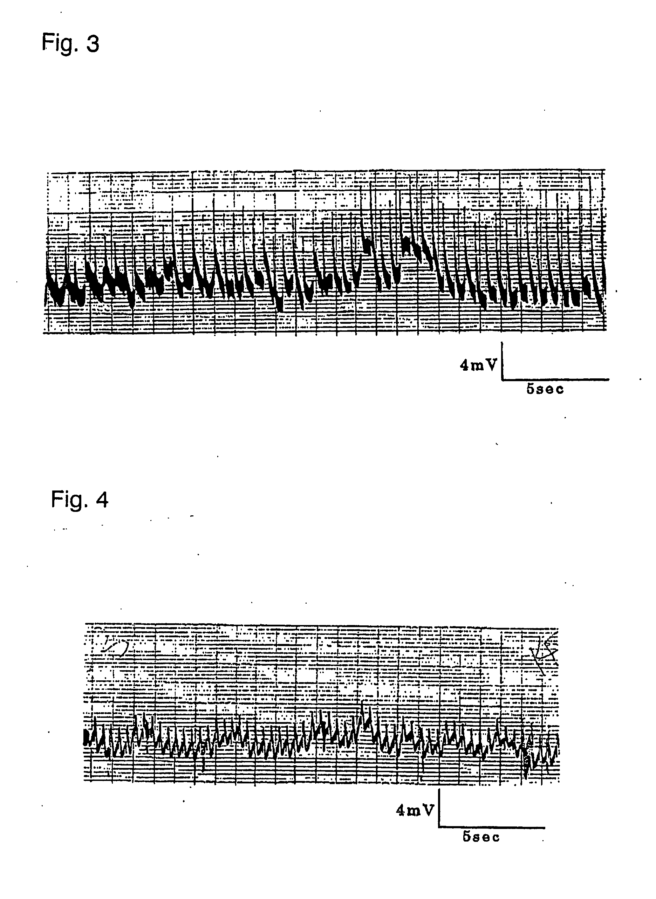

Fig. 3 is an SECG of the surface of the heart as it was resuscitated after the 7-day preservation.

### - Experiment 2 (for 8 days)

Weight of the heart before preservation: 31.2 g
Date on which the preservation was started: February 17, 2002
Oil used: silicone oil
Gas used: gas mixture (not pressurized)
Procedure: The heart coated with the oil was wrapped in a polyurethane foam and put into a container (bin), which was placed into a chamber and purged with the gas mixture. The chamber was then put in a refrigerator and maintained at a chill temperature of 2-4°C. The organ was taken out every other day and recoated with the silicone oil. Date on which resuscitation was started: February 25, 2002 Weight of the heart before the start of resuscitation: 23.5 g (24.6% moisture removed)

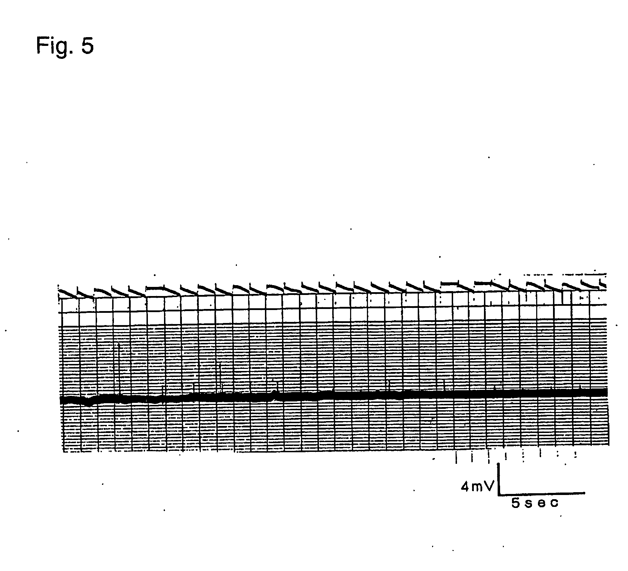

Fig. 4 is an SECG of the surface of the heart as it was resuscitated after the 8-day preservation.

### Example 5 (Long-term preservation of swine hearts after dehydration by exposure to gas)

In this example, an attempt was made to preserve swine hearts for an extended period (for 37 days) through application of dehydration by exposure to gas.
Swine's weight: 5 kg
Weight of the heart before preservation: 32.6 g
Date on which the preservation was started: December 16, 2001
Gas used: gas mixture (not pressurized)
Procedure: The heart coated with an oil was wrapped in a polyurethane foam and put into a container (bin), which was placed into a chamber and purged with the gas mixture. The chamber was then put in a refrigerator and maintained at a chill temperature of 2-4°C. The organ was taken out every other day and recoated with the silicone oil. One week after the start of dehydration, the heart was immersed in an inert medium (PFC) and maintained at a chill temperature of 2-4°C.
Date on which resuscitation was started: January 22, 2002

Thirty-seven days after the start of dehydration, the organ was taken out and subjected to irrigation for resuscitation.
Weight of the heart before the start of resuscitation: 25.1 g (23% moisture removed)

As Fig. 5 shows, an SECG appeared from the surface of the heart (at 29.0°C) after the start of resuscitation (19:04). Eight to 40 pulses were recorded per minute at amplitudes of 1 mV to 5 mV (maximum).

## Claims

**1.** A method for preserving mammalian organs comprising the steps of: withdrawing water from an organ having a physiologically normal water content through the vascular system in the organ, thereby to remove at least about 10% of water by weight based on the total weight of the organ before dehydration, but leave about 10% to about 20% of water by weight based on the total water content before dehydration; immersing said organ in an inert medium; and maintaining said organ at a chill temperature.

**2.** A method for preserving a mammalian heart comprising the steps of: removing blood from a heart by flushing with physiological saline until the blood in the heart is replaced by the physiological saline; removing water from the flushed heart by withdrawing water through the blood vessel system in the heart, thereby to remove about 10% to about 50% of water by weight based on the total weight of the heart before dehydration, immersing said heart in an inert medium; and maintaining said heart at a chill temperature between about 1°C and about 8°C.

**3.** A method for preserving a mammalian heart comprising the steps of removing blood from a heart by flushing with physiological saline until the blood in the heart is replaced by the physiological saline; removing water from the flushed heart by withdrawing water from the blood vessel system in the heart, thereby to remove about 25% to about 60% of water by weight based on the total weight of the heart before dehydration, immersing said heart in an inert medium; and maintaining said heart at a chill temperature between about 1 and about 8°C.

**4.** The method according to any one of claims 1-3, wherein the step of removing water comprises using a gas as a medium to withdraw water from within the organ, and feeding the gas into the vascular system in the organ.

**5.** The method according to claim 4, wherein the step of removing water comprises perfusing a gas into the aorta of the heart so that the resulting flow of said gas withdraws water from within the blood vessel system in the heart.

**6.** The method of preservation according to any one of claims 1-3, wherein the step of removing water comprises feeding air into the vascular system in the organ or heart.

**7.** The method of preservation according to any one of claims 1-3, wherein the step of removing water comprises feeding an O₂-based gaseous mixture of O₂ and CO₂ into the vascular system in the organ or the heart.

**8.** The method of preservation according to any one of claims 1-3, which further comprises a step of contacting a dehydrator with the organ immersed in an inert medium.

**9.** The method of preservation according to claim 1 or 2, wherein trehalose is dissolved in said physiological saline.

**10.** The method of preservation according to any one of claims 1-3, wherein a liquid perfluorocarbon is used as said inert medium.

**11.** The method of preservation according to claim 1, wherein said organ is selected from the group consisting of the heart, liver, kidneys, pancreas and lungs.

**13.** The method of preservation according to claim 1, wherein said organ is a swine heart.

**14.** A method for preserving mammalian organs comprising the steps of : forming an oil film on the surface of a heart having a physiologically normal water content; exposing said heart to a gas such that water in said heart is evaporated into said gas, thereby to remove at least about 10% of water by weight based on the total weight of the heart before dehydration; maintaining said organ at a chill temperature between about 2°C and about 8°C.

**15.** A method for preserving mammalian hearts comprising the steps of: removing blood from a heart by flushing with physiological saline until the blood in the heart is replaced by the physiological saline; forming an oil film on the surface of the flushed heart; exposing said heart to a gas such that water in said heart is evaporated into said gas, thereby to remove at least about 10% to 50% of water by weight based on the total weight of the heart before dehydration; maintaining said heart at a chill temperature between about 1°C and about 8°C.

**16.** The method of preservation according to claims 14 or 15, which comprises immersing the dehydrated organ in an inert medium during the step of maintaining it at a chill temperature between about 1°C and about 8°C.

**17.** The method of preservation according to claim 14 or 15, wherein said organ is selected from the group consisting of the heart, liver, kidneys, pancreas and lungs.

**18.** The method of preservation according to claim 17, wherein said organ is a swine heart.
